# FASCICULE DE BREVET EUROPEEN

(11) **EP 4 441 354 B1**
(45) Date de publication et mention de la délivrance du brevet: **03.09.2025**
(21) Numéro de dépôt: 22834692.0
(22) Date de dépôt: 02.12.2022
(51) Int. Cl.: F02K 1/04, F02K 1/44

(54) **ENSEMBLE POUR CÔNE D'ÉJECTION DE TURBOMACHINE D'AÉRONEF**
ANORDNUNG FÜR EINEN ABGASKONUS EINER FLUGZEUGTURBOMASCHINE
ASSEMBLY FOR AN EXHAUST CONE OF AN AIRCRAFT TURBOMACHINE

(30) Priorité: 03.12.2021 FR 2112894
(43) Date de publication de la demande: 09.10.2024
(73) Titulaire: Safran Nacelles, 76700 Gonfreville-l'Orcher (FR)
(72) Inventeur: MIOSSEC, Tony, 77550 MOISSY-CRAMAYEL (FR); BRAVIN, Fabien, 77550 MOISSY-CRAMAYEL (FR); DEVANLAY, Vincent, 77550 MOISSY-CRAMAYEL (FR); VERSAEVEL, Marc, 77550 MOISSY-CRAMAYEL (FR); SIMEON, Valentin, 77550 MOISSY-CRAMAYEL (FR)
(74) Mandataire: Brevalex
(86) Numéro de dépôt international: PCT/FR2022/052219
(87) Numéro de publication internationale: WO 2023/099851

(56) Documents cités:
- FR-A1- 2 987 079
- FR-A1- 3 095 476
- FR-A1- 3 100 575

## Description

### DOMAINE TECHNIQUE

L'invention concerne un ensemble pour cône d'éjection de turbomachine d'aéronef, un cône d'éjection pour turbomachine d'aéronef comprenant un tel ensemble, ainsi qu'une turbomachine pour aéronef comprenant un tel cône d'éjection.

### ÉTAT DE LA TECHNIQUE ANTÉRIEURE

De manière classique, une turbomachine pour aéronef comprend, de l'amont vers l'aval dans le sens d'écoulement des gaz suivant une direction axiale, une soufflante, un compresseur basse pression, un compresseur haute pression, une chambre de combustion, une turbine haute pression, une turbine basse pression et une tuyère d'échappement comprenant un carter d'échappement et un cône d'éjection relié, en amont, au carter d'échappement.

Ce cône d'éjection comprend une partie amont annulaire équipée de caissons acoustiques pour l'atténuation du bruit produit par la combustion des gaz et/ou la rotation des différents étages de turbine et se propageant le long de la turbomachine, ainsi qu'une partie aval conique. Ces caissons acoustiques sont formés par une première paroi annulaire radialement interne, une deuxième paroi annulaire radialement externe et par des cloisons droites s'étendant globalement radialement entre les première et deuxième parois et définissant entre elles une structure alvéolaire en nid d'abeille. Les cloisons sont en outre assemblées par brasage à la première paroi. Les caissons acoustiques ainsi formés présentent de petites dimensions et un petit volume, de l'ordre de 1 cm³ à 2 cm³.

Un cône d'éjection selon l'art antérieur est divulgué dans le document FR2987079A1.

La mise en œuvre de tels caissons acoustiques n'est toutefois pas toujours adaptée. Elle est par exemple peu adaptée à l'absorption du bruit à basse fréquence, ce qui est le cas du bruit de combustion. Par ailleurs, la fixation par brasage prévue entre les cloisons et la première paroi n'est pas adaptée à tout type de matériau, tel que les matériaux composites à matrice céramique. Elle n'est pas non plus adaptée à l'utilisation de matériaux différents pour les cloisons et les première et deuxième parois et à la reprise des efforts engendrés par la dilatation thermique différentielle entre les cloisons et les première et deuxième parois du fait de l'utilisation de tels matériaux différents.

### EXPOSÉ DE L'INVENTION

La présente invention vise à pallier les problèmes mentionnés ci-dessus.

A cet effet, l'invention a pour objet un ensemble pour cône d'éjection de turbomachine d'aéronef selon la revendication 1, comprenant une première paroi annulaire centrée sur un axe longitudinal de direction axiale orientée d'amont en aval, une pluralité de premières cloisons et de deuxièmes cloisons s'étendant sensiblement perpendiculairement depuis la première paroi, dans lequel les premières cloisons s'étendent globalement suivant la direction axiale et sont réparties circonférentiellement autour de la première paroi, dans lequel les deuxièmes cloisons s'étendent globalement suivant une direction circonférentielle entre les paires de premières cloisons adjacentes et sont réparties circonférentiellement autour de la paroi annulaire en au moins un rang circonférentiel, et dans lequel la première paroi, les premières cloisons et les deuxièmes cloisons définissent entre elles une pluralité de caissons acoustiques répartis autour de la première paroi.

Selon un premier aspect de l'invention, un assemblage formé par les premières et les deuxièmes cloisons est fixé sur la première paroi au moyen de premiers organes de fixation agencés en amont et de deuxièmes organes de fixation agencés en aval, et en ce que les premiers organes de fixation sont décalés circonférentiellement par rapport aux deuxièmes organes de fixation.

Selon des variantes de réalisation de ce premier aspect de l'invention qui peuvent être prises ensemble ou séparément :
- les premiers organes de fixation sont montés entre des deuxièmes cloisons du rang circonférentiel le plus en amont et une portion amont de la première paroi ;
- les premiers organes de fixation sont montés d'un seul côté, du côté aval, desdites deuxièmes cloisons suivant la direction axiale ;
- chaque premier organe de fixation est séparé des premiers organes de fixation qui lui sont circonférentiellement adjacents, par une ou deux premières cloisons ;
- les premiers organes de fixation sont montés entre des premières cloisons et une portion amont de la première paroi ;
- les premiers organes de fixation sont montés en amont des rangs circonférentiels de deuxièmes cloisons;
- les premiers organes de fixation sont montés de chaque côté desdites premières cloisons suivant la direction circonférentielle ;
- les deuxièmes organes de fixation sont montés entre des premières cloisons et une portion aval de la première paroi en aval des rangs circonférentiels de deuxièmes cloisons ;
- les deuxièmes organes de fixation sont montés de chaque côté desdites premières cloisons suivant la direction circonférentielle ;
- chaque deuxième organe de fixation est monté d'un seul côté desdites premières cloisons suivant la direction circonférentielle, en regard d'un autre deuxième organe de fixation.

Selon un deuxième aspect de l'invention, qui peut être combiné ou non au premier aspect, les deuxièmes cloisons sont des cloisons courbées comprenant au moins une portion arquée suivant la direction axiale vers l'amont ou vers l'aval.

Selon des variantes de réalisation de ce deuxième aspect de l'invention qui peuvent être prises ensemble ou séparément :
- les portions arquées des deuxièmes cloisons de l'un au moins des rangs circonférentiels définissent un motif se répétant le long dudit rang circonférentiel et le motif des portions arquées des deuxièmes cloisons dudit rang circonférentiel consiste en une portion arquée vers l'amont ou vers l'aval, de sorte que toutes les portions arquées des deuxièmes cloisons dudit rang circonférentiel sont orientés dans un même sens axial, vers l'amont ou vers l'aval ;
- les portions arquées des deuxièmes cloisons de l'un au moins des rangs circonférentiels définissent un motif se répétant le long dudit rang circonférentiel et le motif des portions arquées des deuxièmes cloisons dudit rang circonférentiel consiste en une portion arquée vers l'amont suivie d'une portion arquée vers l'aval, de manière à obtenir une alternance d'une portion arquée vers l'amont et d'une portion arquée vers l'aval tout le long dudit rang circonférentiel ;
- les portions arquées des deuxièmes cloisons de l'un au moins des rangs circonférentiels définissent un motif se répétant le long dudit rang circonférentiel et le motif des portions arquées des deuxièmes cloisons dudit rang circonférentiel consiste en deux portions arquées vers l'amont suivies de deux portions arquées vers l'aval, de manière à obtenir une alternance de deux portions arquées vers l'amont et de deux portions arquées vers l'aval tout le long dudit rang circonférentiel ;
- le long de l'un au moins des rangs circonférentiels, deux ou plus portions arquées successives sont interposées entre chaque paire de premières cloisons adjacentes ;
- chaque deuxième cloison de l'un au moins des rangs circonférentiels porte une unique portion arquée ;
- chaque deuxième cloison de l'un au moins des rangs circonférentiels porte une portion arquée vers l'amont et une portion arquée vers l'aval ;

L'invention a encore pour objet un cône d'éjection pour turbomachine d'aéronef comprenant un ensemble tel que précédemment décrit.

L'invention a aussi pour objet une turbomachine pour aéronef, comprenant un cône d'éjection tel que précédemment décrit.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
[Fig.1] est une vue schématique, en coupe longitudinale, d'une turbomachine comprenant un cône d'éjection pourvu d'un ensemble selon un mode de réalisation de l'invention :
[Fig.2] est une vue en perspective du cône d'éjection illustré à la figure 1;
[Fig.3] est une vue partielle, en perspective, du cône d'éjection illustré à la figure 2 ;
[Fig.4] est une vue partielle, en coupe longitudinale, du cône d'éjection illustré aux figures 2 et 3 ;
[Fig.5] est une vue partielle radialement vers l'extérieur du cône d'éjection illustré aux figures 2 à 4 ;
[Fig.6] est une vue, partielle et schématique, radialement vers l'extérieur d'un cône d'éjection selon un mode de réalisation de l'invention ;
[Fig.7] est une vue, partielle et schématique, radialement vers l'extérieur d'un cône d'éjection selon un mode de réalisation de l'invention ;
[Fig.8] est une vue, partielle et schématique, radialement vers l'extérieur d'un cône d'éjection selon un mode de réalisation de l'invention ;
[Fig.9] est une vue, partielle et schématique, radialement vers l'extérieur d'un cône d'éjection selon un mode de réalisation de l'invention ;
[Fig.10] est une vue, partielle et schématique, radialement vers l'extérieur d'un cône d'éjection selon un mode de réalisation de l'invention ;
[Fig.11] est une vue, partielle et schématique, radialement vers l'extérieur d'un cône d'éjection selon un mode de réalisation de l'invention ;
[Fig.12] est une vue, partielle et schématique, radialement vers l'extérieur d'un cône d'éjection selon un mode de réalisation de l'invention ;
[Fig.13] est une vue, partielle et schématique, radialement vers l'extérieur d'un cône d'éjection selon un mode de réalisation de l'invention ;
[Fig.14] est une vue, partielle et schématique, radialement vers l'extérieur d'un cône d'éjection selon un mode de réalisation de l'invention.

### DESCRIPTION DETAILLEE

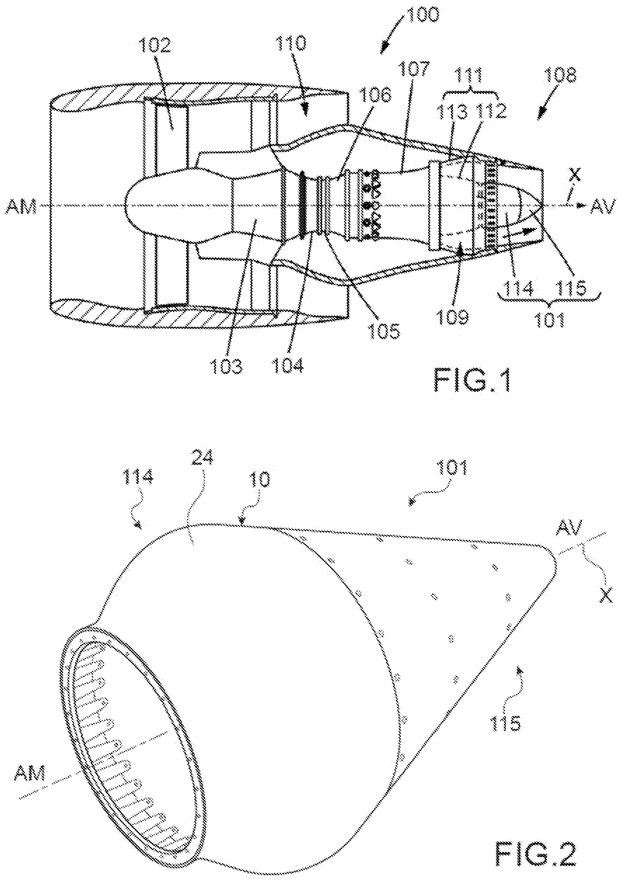

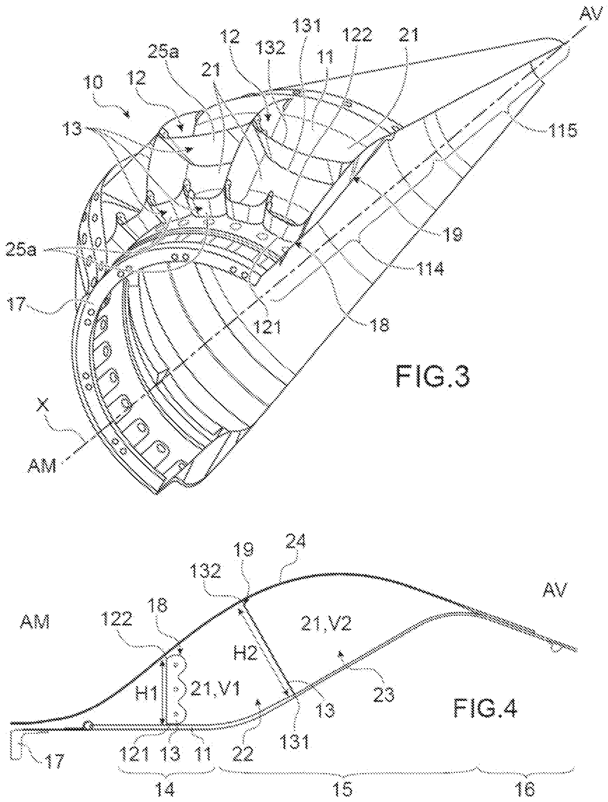

La figure 1 montre une turbomachine 100 pour aéronef comprenant un cône d'éjection 101 pourvu d'un ensemble 10 selon un mode de réalisation de l'invention. Le cône d'éjection 101 est montré plus en détail aux figures 2 et 3.

A titre préliminaire, il est défini une direction axiale, une direction radiale qui est orthogonale à la direction axiale et une direction circonférentielle qui est orthogonale aux directions axiale et radiale.

La turbomachine 100 s'étend suivant un axe longitudinal X de direction axiale et comprend, de l'amont AM vers l'aval AV dans le sens d'écoulement des gaz suivant la direction axiale, une soufflante 102, un compresseur basse pression 103, un compresseur haute pression 104, une chambre de combustion 105, une turbine haute pression 106, une turbine basse pression 107 et une tuyère d'échappement 108 comprenant notamment le cône d'éjection 101.

La turbomachine 100 comprend en outre, en aval de la soufflante 102, un canal d'écoulement de flux primaire 109 annulaire, appelé veine primaire, le long duquel un flux de gaz primaire circule et traverse le compresseur basse pression 103, le compresseur haute pression 104, la chambre de combustion 105, la turbine haute pression 106 et la turbine basse pression 107, et un canal d'écoulement de flux secondaire 110 annulaire, appelé veine secondaire, entourant la veine primaire 109 et le long duquel un flux de gaz secondaire circule. Les flux de gaz primaire et secondaire se mélangent au niveau de la tuyère d'échappement 108.

La turbomachine 100 comprend encore, en aval de la turbine basse pression 107 et en amont de la tuyère d'échappement 108, un carter d'échappement 111 comprenant une virole radialement interne 112 et une virole radialement externe 113 définissant un espace annulaire formant, en aval de la turbine basse pression 107, une partie de la veine primaire 109.

Le cône d'éjection 101 comprend par exemple une partie amont 114 annulaire reliée à la virole radialement interne 112 du carter d'échappement 111 et comprenant l'ensemble 10 selon l'invention, et une partie aval 115 conique reliée à la partie amont 114.

L'ensemble 10 selon l'invention est montré plus en détail aux figures 2 à 14. Il comprend une première paroi 11 annulaire, des premières cloisons 12 et des deuxièmes cloisons 13. La première paroi 11 est centrée sur l'axe longitudinal X. La première paroi 11 peut présenter, de l'amont AM vers l'aval AV, une première portion 14 globalement cylindrique, une deuxième portion 15 globalement tronconique divergeant vers l'aval AV et une troisième portion 16 globalement tronconique convergeant vers l'aval AV (figure 4). La première paroi 11 peut en outre être fixée, en amont, à la virole radialement interne 112 du carter d'échappement 111, notamment par l'intermédiaire d'une extrémité amont 17 de sa première portion 14. La première paroi 11 peut encore être fixée, en aval, à la partie aval 115 du cône d'éjection 101. La première paroi 11 est par exemple réalisée en un matériau composite à matrice céramique. Plus généralement, elle peut être réalisée avec tout type de matériau apte à supporter des températures supérieures ou égales à 450 °C. Les premières et deuxièmes cloisons 12, 13 s'étendent sensiblement perpendiculairement depuis la première paroi 11 entre un bord d'extrémité radialement interne 121, 131, agencé en regard de la première paroi 11, et un bord d'extrémité radialement externe 122, 132 (figures 3 à 5). Les premières et deuxièmes cloisons 12, 13 sont agencées radialement à l'extérieur de la première paroi 11. Les premières et deuxièmes cloisons 12, 13 peuvent être réalisées à partir de métal, par exemple de titane ou d'Inconel^{®}. Il s'agit par exemple d'Inconel^{®} 625 ou d'Inconel^{®} 718. Les premières et deuxièmes cloisons 12, 13 peuvent également être réalisées en matériau composite, notamment en matériau composite à matrice céramique. Plus généralement, elles peuvent être réalisées avec tout type de matériau apte à supporter des températures supérieures ou égales à 450 °C.

Les premières cloisons 12 s'étendent en outre globalement suivant la direction axiale et sont réparties circonférentiellement autour de la première paroi 11, notamment régulièrement (figure 3). Les premières cloisons 12 sont par exemple identiques en forme et en dimensions.

Les deuxièmes cloisons 13 s'étendent quant à elles globalement suivant la direction circonférentielle entre les paires de premières cloisons 12 adjacentes (figure 3). Les deuxième cloisons 13 sont en outre réparties circonférentiellement autour de la paroi annulaire 11, notamment régulièrement, en au moins un rang circonférentiel 18, 19, par exemple deux rangs circonférentiels 18, 19 espacés axialement l'un par rapport à l'autre. Les deuxièmes cloisons 13 du rang circonférentiel 18 le plus en amont peuvent s'étendre depuis la première portion 14 de la première paroi 11, tandis que les deuxièmes cloisons 13 du rang circonférentiel 19 le plus en aval peuvent s'étendre depuis la deuxième portion 15 de la première paroi 11. Les deuxièmes cloisons 13 d'un même rang circonférentiel 18, 19 sont par exemple identiques en forme et en dimensions.

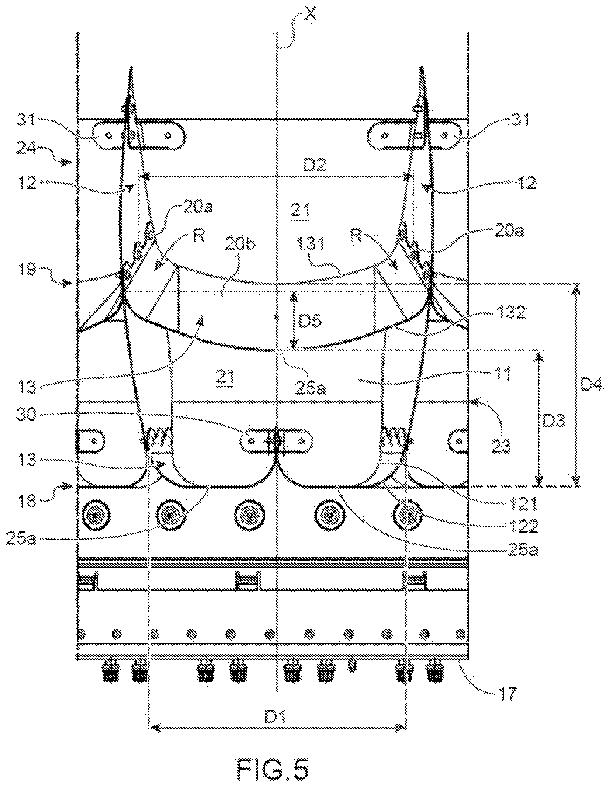

Les deuxièmes cloisons 13 peuvent être fixées, à chacune de leurs extrémités circonférentielles 20a, à celle des premières et deuxièmes cloisons 12, 13 qui lui est circonférentiellement le plus proche, notamment par rivetage (figure 5). Les premières et deuxièmes cloisons 12, 13 forment ainsi un assemblage solidaire ou encore d'un seul tenant. Les extrémités circonférentielles 20a de chacune des deuxièmes cloisons 13 sont par exemple formées par des pattes s'étendant globalement axialement depuis une âme centrale 20b de ladite deuxième cloison 13.

Le long d'un rang circonférentiel 18, 19, une ou plusieurs deuxièmes cloisons 13 peuvent être agencées entre chaque paire de premières cloisons 12 adjacentes. Ainsi, par exemple, lorsqu'une seule deuxième cloison 13 d'un rang circonférentiel 18, 19 est agencée entre une paire de premières cloisons 12 adjacentes, chacune de ses extrémités circonférentielles 20a est fixée à l'une des premières cloisons 12 de ladite paire. Lorsque deux deuxièmes cloisons 13 d'un rang circonférentiel 18, 19 sont agencées entre une paire de premières cloisons 12 adjacentes, l'une des extrémités circonférentielles 20a desdites deuxièmes cloisons 13 est fixée à l'une des premières cloisons 12 de ladite paire, et leurs autres extrémités circonférentielles 20a sont fixées l'une à l'autre.

La première paroi 11, les premières cloisons 12 et les deuxièmes cloisons 13 définissent en outre entre elles une pluralité de caissons acoustiques 21 répartis autour de la première paroi 11 en au moins une rangée circonférentielle 22, 23, par exemple deux rangées circonférentielles 22, 23 se succédant axialement. Les caissons acoustiques 21 sont notamment conçus pour absorber au moins une partie du bruit engendré par la combustion des gaz dans la chambre de combustion 105, notamment le bruit à basse fréquence, typiquement entre 300 Hz et 1000 Hz.

Chacun des caissons acoustiques 21 est ainsi délimité radialement vers l'intérieur par la première paroi 11, circonférentiellement par une paire de premières cloisons 12 et axialement par une ou des deuxièmes cloisons 13. Par exemple, les caissons acoustiques 21 de la rangée circonférentielle 22 la plus en amont sont délimités axialement, vers l'amont AM, par une ou des deuxièmes cloisons 13 situées entre ladite paire de premières cloisons 12 et appartenant au rang circonférentiel 18 le plus en amont et, vers l'aval AV, par une ou des deuxièmes cloisons 13 situées entre ladite paire de premières cloisons 12 et appartenant au rang circonférentiel 19 le plus en aval. Les caissons acoustiques 21 de la rangée circonférentielle 23 la plus en aval sont quant à eux délimités axialement vers l'amont AM par les deuxièmes cloisons 13 du rang circonférentiel 19 le plus en aval. Ils peuvent en outre être délimités vers l'aval AV par la première paroi 11, notamment sa deuxième portion 15.

Les caissons acoustiques 21 peuvent aussi être délimités radialement vers l'extérieur par la deuxième paroi 24 qui est centrée sur l'axe longitudinal X (figures 2 et 4). La deuxième paroi 24 rejoint par exemple la première paroi 12 en aval des premières cloisons 12, notamment au niveau de la troisième portion 16 de la première paroi 12. La deuxième paroi 24 est multi-perforée de manière à laisser passer une partie de l'énergie acoustique de la veine primaire 109 dans les caissons acoustiques 21 et ainsi assurer l'atténuation du bruit engendré par la combustion des gaz dans la chambre de combustion 105. La deuxième paroi 24 est par exemple fixée, en aval, à la partie aval 115 conique du cône d'éjection 101. La deuxième paroi 24 peut être réalisée en un matériau composite à matrice céramique. Plus généralement, elle peut être réalisée avec tout type de matériau apte à supporter des températures supérieures ou égales à 450 °C.

Des dimensions et une conformation de la première paroi 11, des premières cloisons 12, des deuxièmes cloisons 13 et le cas échéant de la deuxième paroi 24 sont telles que les caissons acoustiques 21 présentent de grands volumes, notamment des volumes compris entre 3000 cm³ et 5000 cm³.

A titre d'exemple (figures 4 et 5), un volume V1 des caissons acoustiques 21 de la rangée circonférentielle 22 la plus en amont est sensiblement égal à 3710cm³, tandis qu'un volume V2 des caissons acoustiques 21 la rangée circonférentielle 23 la plus en aval est sensiblement égal à 4230cm³. Pour cela, une hauteur H1 de l'âme centrale 20b des deuxièmes cloisons 13 du rang circonférentiel 18 le plus en amont est par exemple comprise entre 50 et 60mm inclus, notamment sensiblement égale à 55mm. Une hauteur H2 de l'âme centrale 20b des deuxièmes cloisons 13 du rang circonférentiel 19 le plus en aval est par exemple comprise entre 110 et 135mm inclus, notamment sensiblement égale 123mm. Il est entendu par « hauteur », une dimension de l'âme centrale 20b des deuxièmes cloisons 13, prise perpendiculairement à la première paroi 11, entre leurs bords d'extrémité radialement interne 131 et externe 132. Une distance D1 entre chaque paire de premières cloisons 12 adjacentes, prise au niveau du bord d'extrémité radialement externe 122 desdites premières cloisons 12 et au niveau du rang circonférentiel 18 le plus en amont de deuxièmes cloisons 13, est par exemple comprise entre 190 et 230mm, notamment sensiblement égale à 210mm. Une distance D2 entre chaque paire de premières cloisons 12 adjacentes, prise à mi-hauteur entre leurs bords d'extrémité radialement interne 121 et externe 122 et au niveau du rang circonférentiel 19 le plus en aval de deuxièmes cloisons 13, est par exemple comprise entre 225 et 275mm, notamment sensiblement égale à 250mm. Une distance D3, prise suivant la direction axiale, entre le point le plus en amont du bord d'extrémité radialement externe 132 des deuxièmes cloisons 13 du rang circonférentiel 18 le plus en amont et le point le plus en amont du bord d'extrémité radialement externe 132 des deuxièmes cloisons 13 du rang circonférentiel 19 le plus en aval, est par exemple comprise entre 110 et 140mm, notamment sensiblement égale à 124mm. Une distance D4, prise suivant la direction axiale, entre le point le plus en amont du bord d'extrémité radialement externe 132 des deuxièmes cloisons 13 du rang circonférentiel 18 le plus en amont et le point le plus en amont du bord d'extrémité radialement interne 131 des deuxièmes cloisons 13 du rang circonférentiel 19 le plus en aval, est par exemple comprise entre 165 et 200mm, notamment sensiblement égale à 183mm.

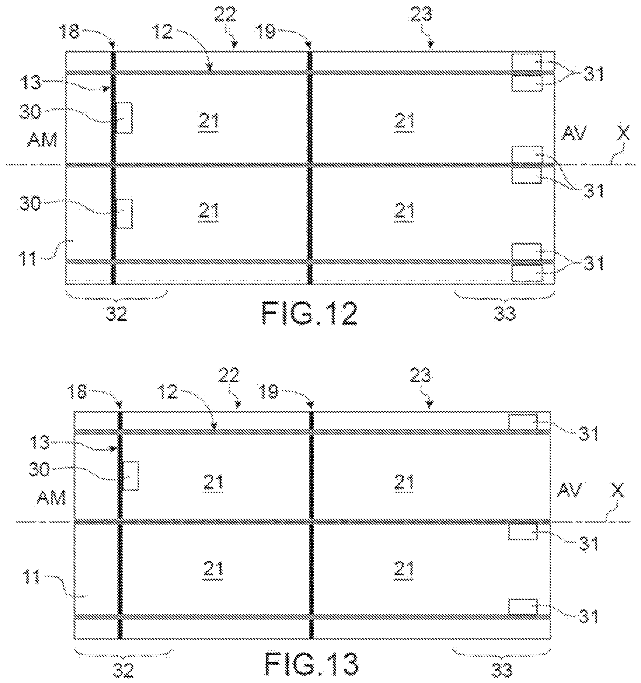

Selon un premier aspect de l'invention, illustré aux figures 12 à 14, l'assemblage formé par les premières et les deuxièmes cloisons 12, 13 est fixé sur la première paroi 11 au moyen de premiers organes de fixation 30 agencés en amont et de deuxième organes de fixation 31 agencés en aval. Les premiers et deuxièmes organes de fixation 30, 31 forment des liaisons mécaniques ponctuelles, telles que des ferrures. Les premiers organes de fixation 30 sont en outre décalés circonférentiellement par rapport aux deuxièmes organes de fixation 31. Les premiers organes de fixation 30 et les deuxièmes organes de fixation 31 sont ainsi désalignés suivant la direction axiale. Il est entendu ici que l'ensemble 10 est dépourvu d'autres moyens de fixation des premières et deuxièmes cloisons 12, 13 à la première paroi 11. De cette manière, les premières cloisons 12 ne peuvent être fixées sur la première paroi 11 qu'en amont ou en aval, mais pas les deux, ce qui permet aux premières cloisons 12 de se dilater librement, notamment suivant la direction axiale. Cela permet d'améliorer la résistance mécanique des caissons acoustiques 21.

Les premiers organes de fixation 30 sont montés entre des premières et/ou des deuxièmes cloisons 12, 13 et une portion amont 32 de la première paroi 11. La portion amont 32 est par exemple formée dans la première portion 14 de la première paroi 11. Les premiers organes de fixation 30 peuvent en outre être globalement alignés circonférentiellement les uns avec les autres.

Les deuxièmes organes de fixation 31 sont montés entre des premières et/ou des deuxièmes cloisons 12, 13 et une portion aval 33 de la première paroi 11. La portion aval 33 est par exemple formée dans la deuxième portion 15 de la première paroi 11. Les deuxièmes organes de fixation 31 peuvent en outre être globalement alignés circonférentiellement les uns avec les autres.

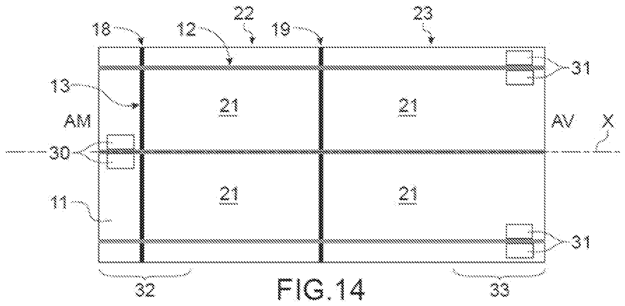

Chaque première cloison 12 est par exemple montée sur la première paroi 11, soit en amont par un ou des premiers organes de fixation 30, soit en aval par un ou des deuxièmes organes de fixation 31. Autrement dit, des premiers ou des deuxièmes organes de fixation 30, 31 sont par exemple montés entre chaque première cloison 12 et la première paroi 11. Sur les figures 12 et 13, chaque première cloison 12 est montée sur la première paroi 11 au moyen d'un ou deux deuxièmes organes de fixation 31. Sur la figure 14, les premières cloisons 12 sont alternativement montées sur la première paroi 11 en amont au moyen de deux premiers organes de fixation 30 et en aval au moyen de deux deuxièmes organes de fixation 31.

Selon un mode de réalisation du premier aspect de l'invention, les premiers organes de fixation 30 sont montés entre des deuxièmes cloisons 13 du rang circonférentiel 18 le plus en amont et la portion amont 32 de la première paroi 11. C'est par exemple le cas des premiers organes de fixation 30 sur les figures 12 et 13. Les premiers organes de fixation 30 peuvent en outre être montés d'un seul côté, notamment du côté aval comme c'est le cas sur les figures 12 et 13, desdites deuxièmes cloisons 13 suivant la direction axiale. Chaque premier organe de fixation 30 peut encore être séparé des premiers organes de fixation 30 qui lui sont circonférentiellement adjacents, par une ou deux premières cloisons 12. Sur la figure 12, un premier organe de fixation 30 est agencé dans chaque caisson acoustique 21 de la rangée circonférentielle 22 la plus en amont. Sur la figure 13, un premier organe de fixation 30 est agencé dans un caisson acoustique 21 sur deux de la rangée circonférentielle 22 la plus en amont.

En variante, les premiers organes de fixation 30 sont montés entre des premières cloisons 12 et la portion amont 32 de la première paroi 11, notamment en amont des rangs circonférentiels 18, 19 de deuxièmes cloisons 13. C'est par exemple le cas des premiers organes de fixation 30 sur la figure 14. Bien sûr, dans ce cas, aucun deuxième organe de fixation 31 ne peut être monté entre lesdites premières cloisons 12 et la portion aval 33 de la première paroi 11. Les premiers organes de fixation 30 peuvent en outre être montés de chaque côté desdites premières cloisons 12 suivant la direction circonférentielle.

Selon un mode de réalisation du premier aspect de l'invention, les deuxièmes organes de fixation 31 sont montés entre des premières cloisons 12 et la portion aval 33 de la première paroi 11, notamment en aval des rangs circonférentiels 18, 19 de deuxièmes cloisons 13. C'est par exemple le cas sur les figures 12 à 14. Les deuxièmes organes de fixation 31 peuvent être montés de chaque côté desdites premières cloisons 12 suivant la direction circonférentielle. C'est par exemple le cas des deuxièmes organes de fixation 31 sur les figures 12 et 14. En variante, chaque deuxième organe de fixation 31 est monté d'un seul côté desdites premières cloisons 12 suivant la direction circonférentielle, notamment en regard d'un autre deuxième organe de fixation 31. Les deuxièmes organes de fixation 31 peuvent ainsi être agencés dans un caisson acoustique 21 sur deux ou plus de la rangée circonférentielle 23 la plus en aval. C'est par exemple le cas des deuxièmes organes de fixation 31 sur la figure 13.

Selon un deuxième aspect de l'invention, qui peut être combiné ou non au premier aspect, les deuxièmes cloisons 13 sont des cloisons courbées comprenant au moins une portion arquée 25a, 25b suivant la direction axiale vers l'amont AM ou vers l'aval AV (figures 2 à 11). La ou les portions arquées 25a, 25b sont notamment réalisées dans l'âme centrale 20b des deuxièmes cloisons 13. Cela permet d'une part de limiter les efforts induits par la dilatation thermique dans les caissons acoustiques 21, notamment suivant la direction circonférentielle, par exemple lorsque les gaz d'échappement de la turbomachine 100 sont à haute température telle que des températures allant de 600 à 650°C. Cela permet d'autre part de réduire les efforts axiaux qui s'exercent sur les deuxièmes cloisons 13 du fait de la pression des gaz dans les caissons acoustiques 21 et donc qui sont à supporter par les caissons acoustiques 21, et ainsi d'améliorer la résistance mécanique des caissons acoustiques 21.

Les portions arquées 25a, 25b des deuxièmes cloisons 13 de chaque rang circonférentiel 18, 19 définissent notamment un motif se répétant le long dudit rang circonférentiel 18, 19.

Selon un mode de réalisation de ce deuxième aspect de l'invention, le motif des portions arquées 25a, 25b des deuxièmes cloisons 13 de l'un au moins des rangs circonférentiels 18, 19 consiste en une portion arquée 25a vers l'amont AM ou une portion arquée 25b vers l'aval AV. Ainsi, toutes les portions arquées 25a, 25b des deuxièmes cloisons 13 dudit rang circonférentiel 18, 19 sont orientées dans un même sens axial, vers l'amont AM ou vers l'aval AV. Sur les figures 3, 5, 6 et 11, les portions arquées 25a des deuxièmes cloisons 13 des deux rangs circonférentiels 18, 19 sont orientées vers l'amont AM.

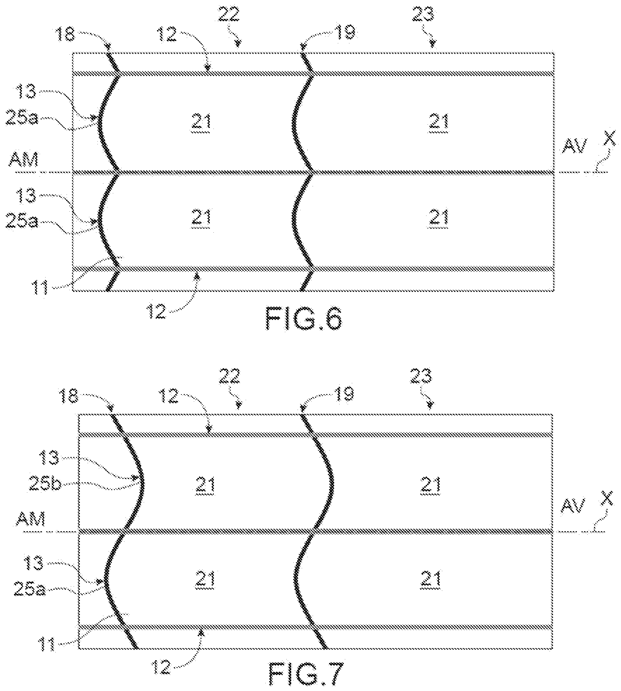

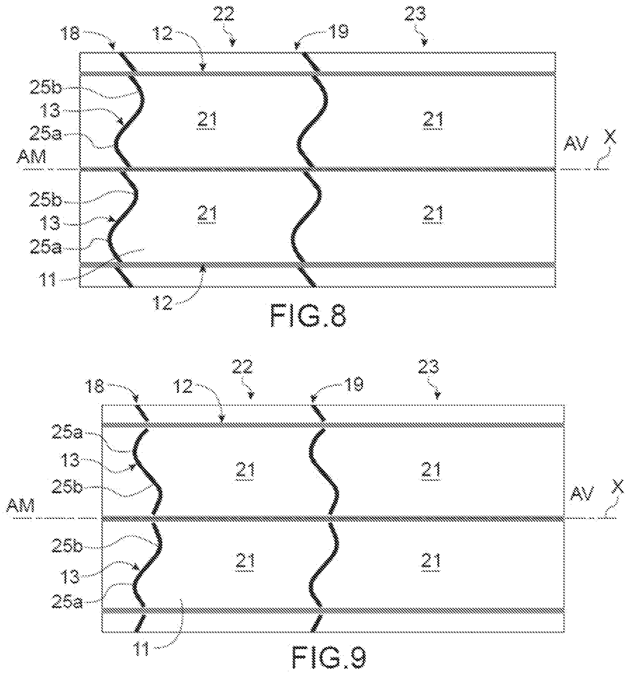

Selon un mode de réalisation de ce deuxième aspect de l'invention, le motif des portions arquées 25a, 25b des deuxièmes cloisons 13 de l'un au moins des rangs circonférentiels 18, 19 consiste en une portion arquée 25a vers l'amont AM suivie d'une portion arquée 25b vers l'aval AV, de manière à obtenir une alternance d'une portion arquée 25a vers l'amont AM et d'une portion arquée 25b vers l'aval AV tout le long dudit rang circonférentiel 18, 19. Sur les figures 7 et 8, les deux rangs circonférentiels 18, 19 comportent une telle alternance d'une portion arquée 25a vers l'amont AM et d'une portion arquée 25b vers l'aval AV.

Selon un mode de réalisation de ce deuxième aspect de l'invention, le motif des portions arquées 25a, 25b des deuxièmes cloisons 13 de l'un au moins des rangs circonférentiels 18, 19 consiste en deux portions arquées 25a vers l'amont AM suivies de deux portions arquées 25b vers l'aval AV, de manière à obtenir une alternance de deux portions arquées 25a vers l'amont AM et de deux portions arquées 25b vers l'aval AV tout le long dudit rang circonférentiel 18, 19. Sur la figure 9, les deux rangs circonférentiels 18, 19 comportent une telle alternance de deux portions arquées 25a vers l'amont AM et de deux portions arquées 25b vers l'aval AV.

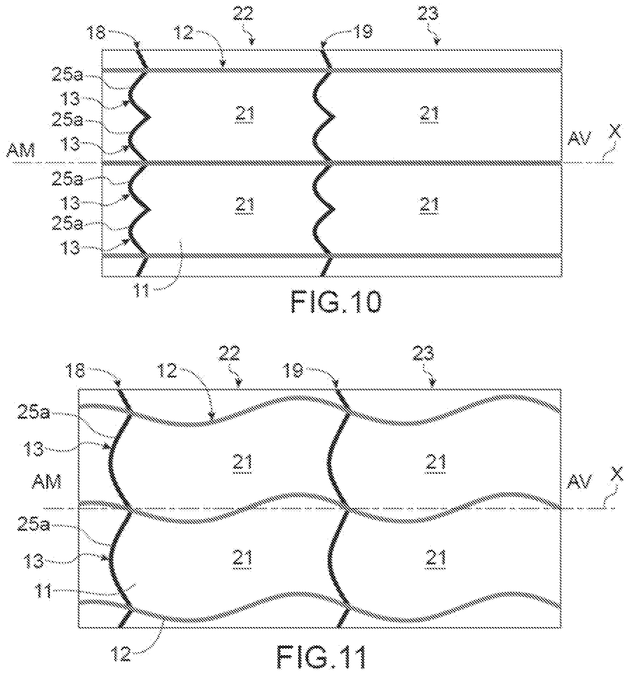

Selon un mode de réalisation de ce deuxième aspect de l'invention, le long de l'un au moins des rangs circonférentiels 18, 19, deux ou plus portions arquées 25a, 25b successives sont interposées entre chaque paire de premières cloisons 12 adjacentes. C'est par exemple le cas du rang circonférentiel 18 le plus en amont sur les figures 3 et 5 où deux portions arquées 25a, 25b vers l'amont AM sont interposées entre chaque paire de premières cloisons 12 adjacentes et des deux rangs circonférentiels 18, 19 sur la figure 10 où deux portions arquées 25a sont orientées dans un même sens axial, vers l'amont AM, entre chaque paire de premières cloisons 12 adjacentes. C'est par exemple aussi le cas des deux rangs circonférentiels 18, 19 sur les figures 8 et 9 où deux portions arquées 25a, 25b sont orientées en alternance vers l'amont AM et vers l'aval AV entre chaque paire de premières cloisons 12 adjacentes.

Selon un mode de réalisation de ce deuxième aspect de l'invention, chaque deuxième cloison 13 de l'un au moins des rangs circonférentiels 18, 19 porte une unique portion arquée 25a, 25b. C'est par exemple le cas sur les figures 3, 5, 6, 7, 10 et 11.

Selon un mode de réalisation de ce deuxième aspect de l'invention, chaque deuxième cloison 13 de l'un au moins des rangs circonférentiels 18, 19 porte une portion arquée 25a vers l'amont AM et une portion arquée 25b vers l'aval AV. C'est par exemple le cas sur les figures 8 et 9.

Par exemple, une distance D5, prise dans un plan axial et au niveau du bord d'extrémité radialement externe 132 de chaque deuxième cloison 13, entre un sommet de la ou d'une des portions arquées 25a, 25b de ladite deuxième cloison 13 et les extrémités circonférentielles de l'âme centrale 20b de ladite deuxième cloison 13 est supérieure ou égale à 20mm (figure 5). Il est entendu par « sommet » le point du bord d'extrémité radialement externe 132 de la deuxième cloison 13 le plus en amont dans le cas d'une portion arquée 25a vers l'amont AM et le plus en aval dans le cas d'une portion arquée vers l'aval AV.

Chaque deuxième cloison 13 peut encore présenter un rayon de transition R entre chacune de ses extrémités circonférentielles 20a et le sommet de la portion arquée 25a 25b de ladite deuxième cloison 13, qui leur est adjacente, supérieur ou égal à 20mm (figure 5).

Selon un mode de réalisation de ce deuxième aspect de l'invention, les premières cloisons 12 sont ondulées suivant la direction axiale. C'est par exemple le cas sur la figure 11.

## Revendications

1. Ensemble (10) pour cône d'éjection (101) de turbomachine (100) d'aéronef, comprenant une première paroi (11) annulaire centrée sur un axe longitudinal (X) de direction axiale orientée d'amont en aval, une pluralité de premières cloisons (12) et de deuxièmes cloisons (13) s'étendant sensiblement perpendiculairement depuis la première paroi (11), dans lequel les premières cloisons (12) s'étendent globalement suivant la direction axiale et sont réparties circonférentiellement autour de la première paroi (11), dans lequel les deuxièmes cloisons (13) s'étendent globalement suivant une direction circonférentielle entre les paires de premières cloisons (12) adjacentes et sont réparties circonférentiellement autour de la paroi annulaire (11) en au moins un rang circonférentiel (18, 19), dans lequel la première paroi (11), les premières cloisons (12) et les deuxièmes cloisons (13) définissent entre elles une pluralité de caissons acoustiques (21) répartis autour de la première paroi (11),
et dans lequel un assemblage formé par les premières et les deuxièmes cloisons (12, 13) est fixé sur la première paroi (11) au moyen de premiers organes de fixation (30) agencés en amont et de deuxième organes de fixation (31) agencés en aval,
l'ensemble (10) étant **caractérisé en ce que** les premiers organes de fixation (30) sont décalés circonférentiellement par rapport aux deuxièmes organes de fixation (31).

2. Ensemble (10) selon la revendication 1, dans lequel les premiers organes de fixation (30) sont montés entre des deuxièmes cloisons (13) du rang circonférentiel (18) le plus en amont et une portion amont (32) de la première paroi (11).

3. Ensemble (10) selon la revendication 2, dans lequel les premiers organes de fixation (30) sont montés d'un seul côté, du côté aval, desdites deuxièmes cloisons (13) suivant la direction axiale et/ou dans lequel chaque premier organe de fixation (30) est séparé des premiers organes de fixation (30) qui lui sont circonférentiellement adjacents, par une ou deux premières cloisons (12).

4. Ensemble (10) selon la revendication 1, dans lequel les premiers organes de fixation (30) sont montés entre des premières cloisons (12) et une portion amont (32) de la première paroi (11).

5. Ensemble (10) selon la revendication 4, dans lequel les premiers organes de fixation (30) sont montés en amont des rangs circonférentiels (18, 19) de deuxièmes cloisons (13) et/ou les premiers organes de fixation (30) sont montés de chaque côté desdites premières cloisons (12) suivant la direction circonférentielle.

6. Ensemble (10) selon l'une des revendications 1 à 5, dans lequel les deuxièmes organes de fixation (31) sont montés entre des premières cloisons (12) et une portion aval (33) de la première paroi (11) en aval des rangs circonférentiels de deuxièmes cloisons (13).

7. Ensemble (10) selon la revendication 6, dans lequel les deuxièmes organes de fixation (31) sont montés de chaque côté desdites premières cloisons (12) suivant la direction circonférentielle ou dans lequel chaque deuxième organe de fixation (31) est monté d'un seul côté desdites premières cloisons (12) suivant la direction circonférentielle, en regard d'un autre deuxième organe de fixation (31).

8. Ensemble (10) selon l'une des revendications 1 à 7, dans lequel les deuxièmes cloisons (13) sont des cloisons courbées comprenant au moins une portion arquée (25a, 25b) suivant la direction axiale vers l'amont ou vers l'aval.

9. Cône d'éjection (101) comprenant un ensemble (10) selon l'une des revendications 1 à 8.

10. Turbomachine (100) pour aéronef, comprenant un cône d'éjection (101) selon la revendication 9.

## Patentansprüche

1. Baugruppe (10) für einen Auswurfkonus (101) einer Turbomaschine (100) für ein Flugzeug, umfassend eine erste ringförmige Wand (11), die auf einer Längsachse (X) mit einer Achsenrichtung (X), die von vorgelagert nach nachgelagert gerichtet ist, zentriert ist, wobei sich eine Vielzahl von ersten Trennwänden (12) und zweiten Trennwänden (13) im Wesentlichen senkrecht von der ersten Wand (11) aus erstrecken, wobei sich die ersten Trennwände (12) insgesamt in axialer Richtung erstrecken und um die erste Wand (11) verteilt sind, wobei sich die zweiten Trennwände (13) insgesamt in einer Umfangsrichtung zwischen den Paaren benachbarter erster Trennwände (12) erstrecken und um die ringförmige Wand (11) in mindestens einer Umfangsreihe (18, 19) verteilt sind, wobei die erste Wand (11), die ersten Trennwände (12) und die zweiten Trennwände (13) untereinander eine Vielzahl von um die erste Wand (11) herum verteilten Schallkästen (21) definieren, und wobei eine von den ersten und den zweiten Trennwänden (12, 13) gebildete Baugruppe mittels vorgelagerter erster Befestigungselemente (30) und nachgelagerter zweiter Befestigungselemente (31) auf der Wand (11) befestigt ist, wobei die Baugruppe (10) **dadurch gekennzeichnet ist, dass** die ersten Befestigungselemente (30) in Bezug auf die zweiten Befestigungselemente (31) umlaufend versetzt sind.

2. Baugruppe (10) nach Anspruch 1, wobei die ersten Befestigungselemente (30) zwischen zweiten Trennwänden (13) der am weitesten vorgelagerten Umfangsreihe (18) und einem vorgelagerten Abschnitt (32) der ersten Wand (11) montiert sind.

3. Baugruppe (10) nach Anspruch 2, wobei die ersten Befestigungselemente (30) auf einer einzigen Seite, auf der nachgelagerten Seite, der zweiten Trennwände (13) in axialer Richtung montiert sind und/oder wobei jedes erste Befestigungselement (30) von den ersten Befestigungselementen (30), die ihm umlaufend benachbart sind, durch eine oder zwei erste Trennwände (12) getrennt ist.

4. Baugruppe (10) nach Anspruch 1, wobei die ersten Befestigungselemente (30) zwischen ersten Trennwänden (12) und einem vorgelagerten Abschnitt (32) der ersten Wand (11) montiert sind.

5. Baugruppe (10) nach Anspruch 4, wobei die ersten Befestigungselemente (30) den Umfangsreihen (18, 19) der zweiten Trennwänden (13) vorgelagert montiert sind und/oder die ersten Befestigungselemente (30) auf jeder Seite der ersten Trennwände (12) entsprechend der Umfangsrichtung montiert sind.

6. Baugruppe (10) nach einem der Ansprüche 1 bis 5, wobei die zweiten Befestigungselemente (31) zwischen ersten Trennwänden (12) und einem nachgelagerten Abschnitt (33) der ersten Wand (11) nach den Umfangsreihen zweiter Trennwände (13) montiert sind.

7. Baugruppe (10) nach Anspruch 6, wobei die zweiten Befestigungselemente (31) auf jeder Seite der ersten Trennwände (12) in Umfangsrichtung montiert sind oder wobei jedes zweite Befestigungselement (31) auf einer Seite der ersten Trennwände (12) in Umfangsrichtung gegenüber einem anderen zweiten Befestigungselement (31) montiert ist.

8. Baugruppe (10) nach einem der Ansprüche 1 bis 7, wobei die zweiten Trennwände (13) gebogene Trennwände sind, die mindestens einen gebogenen Abschnitt (25a, 25b) in axialer Richtung nach oben oder nach unten umfassen.

9. Auswurfkonus (101), umfassend eine Baugruppe (10) nach einem der Ansprüche 1 bis 8.

10. Turbomaschine (100) für ein Flugzeug, umfassend einen Auswurfkonus (101) nach Anspruch 9.

## Claims

1. Assembly (10) for an exhaust cone (101) of an aircraft turbomachine (100), comprising a first annular wall (11) centred on a longitudinal axis (X) running axially from upstream to downstream, a plurality of first partitions (12) and second partitions (13) extending substantially perpendicularly from the first wall (11), wherein the first partitions (12) extend generally in the axial direction and are distributed circumferentially around the first wall (11), wherein the second partitions (13) extend generally in a circumferential direction between the pairs of first adjacent partitions (12) and are distributed circumferentially around the annular wall (11) in at least one circumferential row (18, 19), wherein the first wall (11), the first partitions (12) and the second partitions (13) define between them a plurality of acoustic enclosures (21) distributed around the first wall (11), and wherein an arrangement formed by the first and the second partitions (12, 13) is fixed to the first wall (11) by means of first fixing members (30) arranged upstream and second fixing members (31) arranged downstream, the assembly (10) being **characterised in that** the first fixing members (30) are offset circumferentially relative to the second fixing members (31).

2. Assembly (10) according to claim 1, wherein the first fixing members (30) are mounted between second partitions (13) of the most upstream circumferential row (18) and an upstream portion (32) of the first wall (11).

3. Assembly (10) according to claim 2, wherein the first fixing members (30) are mounted on one side only, on the downstream side, of said second partitions (13) in the axial direction and/or wherein each first fixing member (30) is separated from the first fixing members (30) circumferentially adjacent thereto by one or two first partitions (12).

4. Assembly (10) according to claim 1, wherein the first fixing members (30) are mounted between first partitions (12) and an upstream portion (32) of the first wall (11).

5. Assembly (10) according to claim 4, wherein the first fixing members (30) are mounted upstream of the circumferential rows (18, 19) of second partitions (13) and/or the first fixing members (30) are mounted on each side of said first partitions (12) in the circumferential direction.

6. Assembly (10) according to one of claims 1 to 5, wherein the second fixing members (31) are mounted between first partitions (12) and a downstream portion (33) of the first wall (11) downstream of the circumferential rows of second partitions (13).

7. Assembly (10) according to claim 6, wherein the second fixing members (31) are mounted on each side of said first partitions (12) in the circumferential direction or wherein each second fixing member (31) is mounted on one side only of said first partitions (12) in the circumferential direction, opposite another second fixing member (31).

8. Assembly (10) according to one of claims 1 to 7, wherein the second partitions (13) are curved partitions comprising at least one arcuate portion (25a, 25b) in the axial direction upstream or downstream.

9. Exhaust cone (101) comprising an assembly (10) according to one of claims 1 to 8.

10. Aircraft turbomachine (100), comprising an exhaust cone (101) according to claim 9.
